Europäisches Patentamt

European Patent Office

Office européen des brevets

(19)

(11) EP 0 890 888 B1

(12) EUROPÄISCHE PATENTSCHRIFT

(45) Veröffentlichungstag und Bekanntmachung des Hinweises auf die Patenterteilung:
**15.01.2003 Patentblatt 2003/03**

(51) Int Cl.⁷: **G05B 5/01**

(21) Anmeldenummer: **97810463.6**

(22) Anmeldetag: **11.07.1997**

(54) **Regelsystem zur Regelung wenigstens einer Variablen eines Prozesses sowie Anwendung eines solchen Regelsystems**

Control system for controlling at least one variable of a process and application of such a system

Système de contrôle pour contrôler au moins une variable d'un processus et application d'un tel système

(84) Benannte Vertragsstaaten:
**DE GB**

(43) Veröffentlichungstag der Anmeldung:
**13.01.1999 Patentblatt 1999/02**

(73) Patentinhaber: **ALSTOM (Switzerland) Ltd
5401 Baden (CH)**

(72) Erfinder:
• **Hepner, Stephan, Dr.
5628 Althäusern (CH)**
• **Wihler, Andrew
5408 Ennetbaden (CH)**

(56) Entgegenhaltungen:
EP-A- 0 358 139          WO-A-81/00452
WO-A-88/02882          FR-A- 2 694 822
US-A- 4 066 958          US-A- 4 639 854

EP 0 890 888 B1

**Beschreibung**

TECHNISCHES GEBIET

Die vorliegende Erfindung bezieht sich auf das Gebiet der Regelungstechnik. Sie betrifft ein Regelsystem zur Regelung wenigstens einer Variablen eines Prozesses, welche wenigstens eine Variable aus einer Mehrzahl von gemessenen Prozessgrössen berechnet wird, wobei die gemessenen Prozessgrössen jeweils über zugehörige Messstrecken gemessen werden, deren Uebertragungsfunktionen ein unterschiedliches Zeitverhalten aufweisen.

STAND DER TECHNIK

Bei der Regelung und Ueberwachung von Gasturbinen (GTs) werden Informationen über eine Vielzahl von thermodynamischen Variablen wie z.B. Drücke, Temperaturen und Massenflüsse benötigt. Es gibt dabei jedoch wichtige Prozessvariable, die nicht mit einer ausreichenden Genauigkeit und Zuverlässigkeit zu vernünftigen Kosten direkt gemessen werden können. Solche Prozessvariablen müssen daher aufgrund von Hilfsmessungen und bekannten Beziehungen (auf der Grundlage physikalischer Gesetze und experimenteller Daten) bestimmt werden, welche die Hilfsmessungen mit den gewünschten Prozessvariablen verknüpfen.

Aus der Druckschrift US 5 367 237 A ist ein Regelsystem für ein elektromechanisches Stellglied bekannt, bei dem mehrere Sensorausgänge in einem Filter gemischt werden um ein benötigtes Signal zu berechnen. Durch günstige Wahl der Zeitkonstante des Filters läßt sich die Stabilität des Regelsystems verbessern.

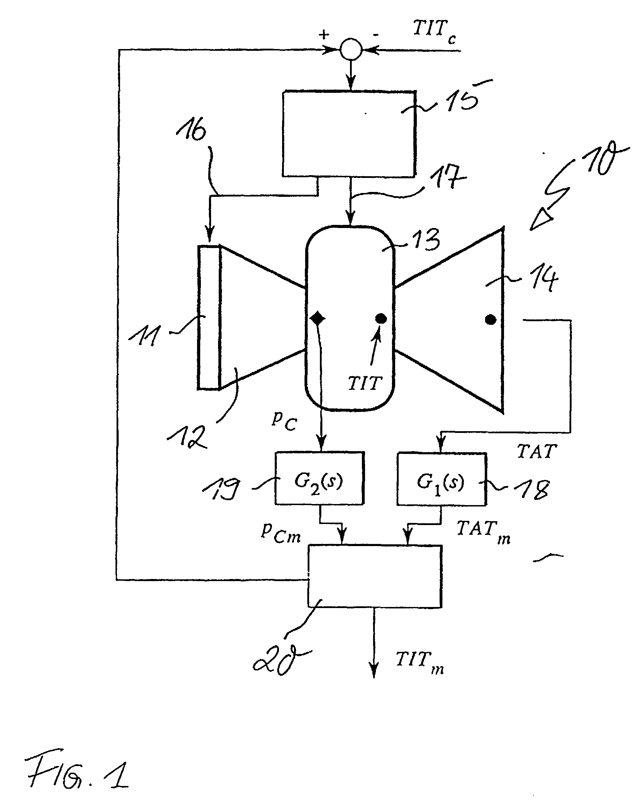

Ein typisches Beispiel für eine derartige indirekt bestimmte Prozessvariable ist die Turbineneinlasstemperatur (Turbine Inlet Temperature TIT) einer Gasturbine. Die Bedingungen am Turbineneinlass lassen keine wirtschaftliche Temperaturmessung an diesem Ort zu. Die lokalen Temperaturen sind zu hoch und führen zu sehr kurzen Standzeiten und hohen Ausfallraten. Direkte Messungen der TIT werden daher vermieden. Statt dessen wird die TIT aus der (niedrigeren) Turbinenauslasstemperatur (TAT) und dem Druck am Kompressorauslass ($p_C$) berechnet, die beide vergleichsweise leicht zu messen sind. Ein typischer Regelkreis für die TIT einer Gasturbine mit den dazugehörigen Messstrecken ist schematisch in Fig. 1 wiedergegeben. Die Gasturbine 10 umfasst einen Kompressor 12, einen Brenner 13 und eine nachfolgende Turbine 14. Dem Kompressor vorgeschaltet sind verstellbare Einlassleitschaufeln 11. Ein Temperaturregler 15 regelt die Turbineneinlasstemperatur TIT nach einem vorgegebenen Sollwert $TIT_c$. Er beeinflusst den Prozess in der Gasturbine 10, indem er über eine erste Steuerleitung 16 die Einlassleitschaufeln 11 verstellt und damit die Verbrennungsluft steuert, und über eine zweite Steuerleitung 17 den Massenfluss des Brennstoffs zum Brenner 13 einstellt. Gemessen werden über eine erste Messstrecke 18 (Uebertragungsfunktion $G_1(s)$) die Turbinenauslasstemperatur TAT, und über eine zweite Messstrecke 19 (Uebertragungsfunktion $G_2(s)$) der Druck $p_C$ am Kompressorauslass. Die gemessenen Werte $p_{Cm}$ und $TAT_m$ werden an eine Berechnungseinheit 20 weitergegeben, die daraus unter Zuhilfenahme einer formelmässigen Beziehung zwischen $p_C$, TAT und TIT den (indirekt) gemessenen Wert $TIT_m$ der Turbineneinlasstemperatur berechnet und zum Vergleich mit dem Sollwert $TIT_c$ an den Temperaturregler 15 zurückführt.

Für die formelmässige Beziehung, die in der Berechnungseinheit 20 verwendet wird, lassen sich die folgenden generellen Aussagen treffen: Wenn y die Prozessvariable bezeichnet, welche nicht direkt gemessen werden kann, und wenn $X = x_1, x_2,....$ einen Satz von messbaren Prozessvariablen (Hilfsvariablen) bedeutet, aus denen y berechnet werden kann, gilt im einfachsten Fall zwischen den Variablen ein algebraischer Ausdruck der folgenden Form:

$$(1.1) \qquad y = f(X).$$

Für die Turbineneinlasstemperatur TIT hat dieser algebraische Ausdruck die Gestalt der sogenannten TIT-Formel, die in der grundlegenden Form lautet:

$$(1.2) \qquad TIT = f(TAT, p_C).$$

In der Praxis enthält die Formel zusätzliche Abhängigkeiten von Umgebungsbedingungen und anderen Variablen, die bei der vorliegenden Erörterung als konstant betrachtet und daher nicht explizit angegeben werden.

Die Auswertung der Formel (1.1) basiert auf Messungen $X_m = x_{1m}, x_{2m},....$ und führt zu einem Wert $y_m$. Die Grösse

$$(1.3) \qquad y_m = f(x_{1m}, x_{2m}, ...)$$

Wird als Pseudomessung von y bezeichnet, weil sie nicht direkt gemessen, sondern aus Hilfsmessungen $X_m$ berechnet ist. Als Beispiel sei hier die Pseudomessung $TIT_m$ der Turbineneinlasstemperatur TIT erwähnt, die sich nach der TIT-Formel (1.2) wie folgt darstellt:

$$(1.4) \qquad TIT_m = f(TAT_m, p_{Cm}),$$

wobei $TAT_m$ und $p_{Cm}$ die entsprechenden Messungen von TAT und $p_C$ bezeichnen.

Die Genauigkeit der Pseudomessung $y_m$ ist durch den Messfehler

$$(1.5) \qquad e_y = y_m - y$$

bestimmt. Dieser Messfehler hängt von der Genauigkeit der Messungen $X_m$ ab. Um eine annehmbare Genauigkeit von $y_m$ zu erhalten, wird üblicherweise die Beziehung (1.3) an verschiedenen stationären Arbeitspunkten der Gasturbine 10 kalibriert. Unglücklicherweise kann selbst eine perfekte stationäre Kalibrierung nicht verhindern, dass bei der Anwendung von Pseudomessungen $y_m$ in dynamischen Regelschleifen (wie der in Fig. 1 dargestellten) sich bei transienten Vorgängen eine schlechte Regelqualität ergibt. Gerade im Fall der Regelung bzw. Ueberwachung der Turbineneinlasstemperatur TIT können daraus Gefahren für die Gasturbine erwachsen, da eine thermische Ueberlastung auftreten kann.

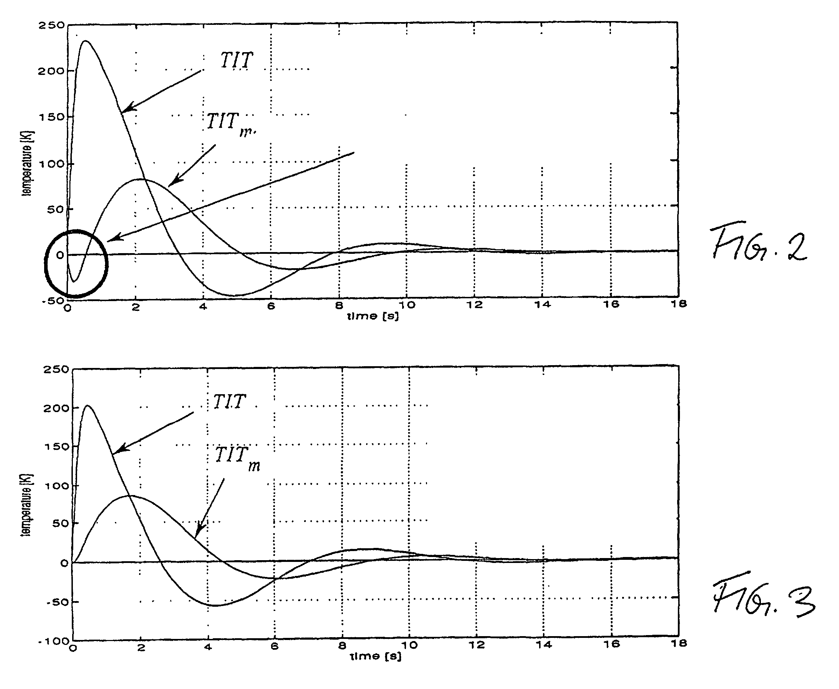

Der hauptsächliche Grund für dieses Problem ist in den unterschiedlichen dynamischen Eigenschaften der Messstrecken (18, 19 in Fig. 1) zu suchen, die mit den Hilfsvariablen (TAT, $p_C$ in Fig. 1) verknüpft sind. Im Fall der TIT-Formel (1.2) ist die Dynamik der Thermoelemente, die üblicherweise zur Messung der Turbinenauslasstemperatur TAT verwendet werden, im allgemeinen sehr viel geringer als die der Druckgeber, welche den Druck $p_C$ am Kompressorauslass messen. Als Folge davon sind die Messungen $TAT_m$ und $p_{Cm}$ nicht synchron und eine pseudo-gemessene $TIT_m$-Transiente nach der Formel (1.4) kann dann erheblich von der tatsächlichen Beziehung gemäss Formel (1.2) abweichen, selbst für den Fall, dass die stationäre Genauigkeit hoch ist (siehe dazu als Beispiel die Darstellung in Fig. 2, aus der hervorgeht, dass als Folge von nichtsynchronisierten Messungen $TAT_m$ und $p_{Cm}$ die daraus berechnete Pseudomessung $TIT_m$ im Vergleich zum tatsächlichen Wert TIT einen erheblichen Phasenfehler (eingekreist) aufweisen kann).

Es versteht sich von selbst, dass die hier am Beispiel der Gasturbine erörterten Probleme der Pseudomessung auch bei anderen Messungen, Prozessen oder Prozessregelungen auftreten und zu negativen Folgen führen können.

DARSTELLUNG DER ERFINDUNG

Es ist daher Aufgabe der Erfindung, ein Regelsystem zu schaffen, bei welchem das unterschiedliche dynamische bzw. Zeitverhalten der verwendeten Messstrecken praktisch keinen negativen Einfluss auf die Stabilität und Genauigkeit der Regelung sowohl bei stationären als auch bei transienten Vorgängen ausübt.

Die Aufgabe wird bei einem Regelsystem der eingangs genannten Art dadurch gelöst, dass zur Vermeidung von Instabilitäten Korrekturmittel vorgesehen werden, welche die verschiedenen Zeitverhalten der einzelnen Messstrecken ausgleichen. Der Kern der Erfindung besteht also darin, die ungleichen Zeitverhalten der einzelnen Messstrecken so zu korrigieren, dass die korrigierten Messstrecken gleiches Zeitverhalten aufweisen.

Eine erste bevorzugte Ausführungsform des Regelsystems nach der Erfindung ist dadurch gekennzeichnet, dass die Korrekturmittel ein oder mehrere Korrekturglieder umfassen, welche hinter den Messstrecken angeordnet sind und das Zeitverhalten der einzelnen Messstrecken korrigieren. Hierdurch wird es möglich das Zeitverhalten jeder einzelnen Messstrecke gezielt so zu korrigieren, dass sich insgesamt praktisch eine synchrone Bereitstellung der Messwerte für die Berechnung der Regelungsgrösse ergibt.

Bevorzugt wird diese Korrektur so durchgeführt, dass jedes der Korrekturglieder eine Uebertragungsfunktion aufweist, welche zusammen mit der Uebertragungsfunktion der zugehörigen Messstrecke eine Gesamtübertragungsfunktion ergibt, welche für alle zu messenden Prozessgrössen zumindest näherungsweise gleich ist.

Erfindungsgemäss wird ein solches Regelsystem weiterhin zur Regelung der Turbineneinlasstemperatur einer Gasturbine verwendet, welche einen Kompressor, einen Brenner und eine nachfolgende Turbine umfasst. Besonders einfach wird die Korrektur, wenn gemäss einer bevorzugten Ausführungsform die berechnete Turbineneinlasstemperatur aus einer über eine erste Messstrecke gemessenen Turbinenauslasstemperatur und einem über eine zweite Messstrecke gemessenen Druck am Kompressorauslass berechnet wird, wenn die Korrekturmittel ein Korrekturglied umfassen, welches hinter die zweite Messstrecke geschaltet ist, wenn die erste Messstrecke eine erste Uebertragungsfunktion aufweist, wenn die zweite Messstrecke eine zweite Uebertragungsfunktion aufweist, und dass das Korrekturglied eine dritte Uebertragungsfunktion aufweist, welche sich als Quotient aus der ersten und zweiten Uebertragungsfunktion ergibt.

Weitere Ausführungsformen ergeben sich aus den abhängigen Ansprüchen.

KURZE ERLÄUTERUNG DER FIGUREN

Die Erfindung soll nachfolgend anhand von Ausführungsbeispielen im Zusammenhang mit der Zeichnung näher erläutert werden. Es zeigen

Fig. 1 den schematisierten Aufbau eines unkorrigierten Regelsystems zur Regelung der Turbineneinlasstemperatur einer Gasturbine;

Fig. 2 einen möglichen Phasenfehler bei der berechneten Turbineneinlasstemperatur $TIT_m$ in einem unkorrigierten Regelsystem gemäss Fig. 1;

Fig. 3 die zu Fig. 2 vergleichbare berechnete Turbineneinlasstemperatur $TIT_m$ nach einer erfindungsgemässen Korrektur des Regelsystems;

Fig. 4 die Uebertragungscharakteristiken (Dämpfung und Phasenverschiebung als Funktion der Frequenz) eines Korrekturgliedes mit Tiefpasscharakter gemäss einer bevorzugten Ausführungsform der Erfindung;

Fig. 5 die Uebertragungscharakteristiken (Dämpfung und Phasenverschiebung als Funktion der Frequenz) eines Korrekturgliedes mit Hochpasscharakter, wie es grundsätzlich im Rahmen der Erfindung auch zur Synchronisierung der Messstrecken einsetzbar ist; und

Fig. 6 das aus Fig. 1 hervorgehende Regelungsschema mit einer Korrektur gemäss einer bevorzugten Ausführungsform der Erfindung.

WEGE ZUR AUSFÜHRUNG DER ERFINDUNG

Der Kern der vorliegenden Erfindung ist (im hier erläuterten konkreten Fall der Gasturbine 10) eine Methode zur Synchronisierung der Messungen $TAT_m$ und $p_{Cm}$, bevor diese unter Verwendung der TIT-Formel (1.4) zur Berechnung der Pseudomessung $TIT_m$ herangezogen werden, um eine hohe dynamische Genauigkeit der Pseudomessung $TIT_m$ zu erreichen. Die erläuterten Lösungsprinzipien lassen sich aber grundsätzlich auf alle Pseudomessungen anwenden, die durch eine Form gemäss (1.1) darstellbar sind.

Zur Erläuterung der erfindungsgemässen Lösung des Problems wird angenommen, dass die Funktion f in der TIT-Formel linear ist, d.h., dass gilt:

$$(2.1) \qquad TIT = aTAT + bp_C + c$$

mit den Konstanten a, b und c. Es ist festzuhalten, dass die im weiteren gezogenen Schlussfolgerungen und gewonnenen Ergebnisse für beliebige linearisierbare algebraische Formen der TIT-Formel und der Pseudomessungen gemäss (1.1) gelten. Die zu der Gleichung (2.1) gehörende Pseudomessung ist

$$(2.2) \qquad TIT_m = aTAT_m + bp_{Cm} + c.$$

Das dynamische Verhalten der Messungen $TAT_m$ und $p_{Cm}$ bzw. der zugehörigen Messstrecken (18, 19 in Fig. 1) kann mit hinreichender Genauigkeit durch zwei lineare Uebertragungsfunktionen $G_1(s)$ und $G_2(s)$ approximiert werden, so dass sich ergibt:

$$(2.3) \qquad TAT_m = G_1(s)TAT \qquad\qquad (2.3)$$

und

$$(2.4) \qquad p_{Cm} = G_2(s)p_C, \qquad\qquad (2.4)$$

wobei s den Laplace-Operator bezeichnet. Für den konkreten Fall der Regelung der Gasturbine 10 können die Uebertragungsfunktionen $G_1(s)$ und $G_2(s)$ durch Filterfunktionen 1.Ordnung approximiert werden:

$$(2.5) \qquad G_1(s) = \frac{1}{sT_1 + 1} \qquad\qquad (2.5)$$

und

$$(2.6) \qquad G_2(s) = \frac{1}{sT_2 + 1}, \qquad\qquad (2.6)$$

wobei $T_1$ und $T_2$ die dominierenden Zeitkonstanten der jeweiligen Messstrecke 19 bzw. 18 sind. Für die nachfolgende Analyse wird $G_2(s)$ als Produkt aus $G_1(s)$ und einem Verhältnisfaktor R(s) dargestellt:

$$(2.7) \qquad G_2(s) = R(s)G_1(s) \qquad\qquad (2.7)$$

mit

$$(2.8) \qquad R(s) = \frac{G_2(s)}{G_1(s)}. \qquad\qquad (2.8)$$

Die Uebertragungsfunktion R(s) beschreibt das Verhältnis der Dynamik der Druckmessung und der Temperaturmessung bzw. der zugehörigen Messstrecken. Einsetzen der Gleichungen (2.3) bis (2.8) in (2.2) ergibt:

$$(2.9) \qquad TIT_m = G_1(s)(aTAT + bR(s)p_C + c).$$

Aus den Gleichungen (2.8) und (2.9) kann man die folgenden Schlüsse ziehen:

(1) Wenn die Zeitkonstanten $T_1$ und $T_2$ der TAT- und $p_c$-Messstrecken identisch sind, sind die beiden Messungen synchron. In diesem Fall ist die Pseudomessung für TIT

$$(2.10) \qquad TIT_m = G_1(s)(aTAT + bp_C + c) = G_1(s)TIT,$$

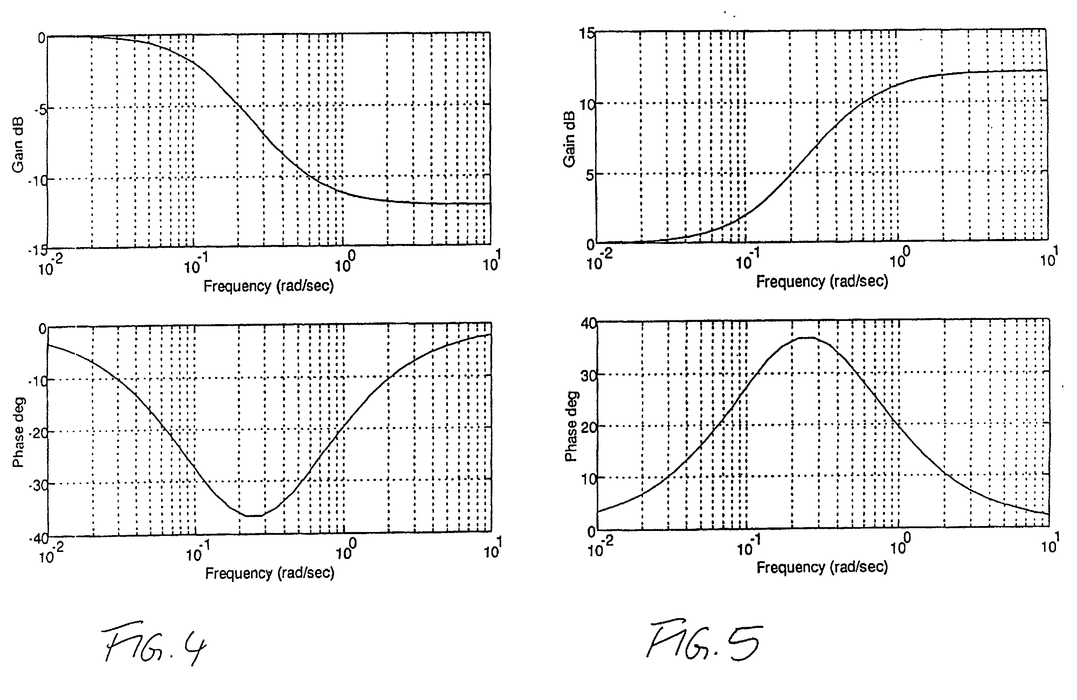

d.h., das Ergebnis ist gleichwertig zu einer direkten TIT-Messung mit der Dynamik $G_1(s)$. Dies ist das gewünschte Verhalten, weil in diesem Fall die TIT-Formel die Messung nicht nur stationär, sondern auch dynamisch korrekt wiedergibt (siehe dazu die Fig. 3, aus der hervorgeht, dass bei gleichen Zeitkonstanten in den beiden Messstrecken zwischen dem tatsächlichen Wert TIT und der Pseudomessung $TIT_m$ eine reine Verzögerung 1.Ordnung existiert). Obgleich dieses Ergebnis streng genommen nur für lineare TIT-Formeln gilt, kann es auch auf nichtlineare (linearisierbare) Pseudomessungen um einen bestimmten Arbeitspunkt herum angewendet werden.

(2) Wenn sich die Zeitkonstanten $T_1$ und $T_2$ unterscheiden, sind die TAT- und die $p_c$-Messung asynchron. In diesem Fall ist R(s)≠1 und die dynamische Antwort von $TIT_m$ kann sich (wie in Fig. 2 gezeigt) bei schnellen Transienten vollständig von dem gewünschten Verhalten unterscheiden. Hierdurch können Instabilitäten in der TIT-Regelschleife angestossen werden und man ist gezwungen, die Bandbreite der Gasturbinenregelung herabzusetzen, um solche schnellen Transienten zu vermeiden. Dadurch wird die Fähigkeit der Gasturbine zu schnellen Lastwechseln oder zum Arbeiten frequenzgesteuerten Modus beeinträchtigt.

(3) Die Zeitkonstanten $T_1$ und $T_2$ unterscheiden sich in nahezu allen Fällen wegen der den Messstrecken zugrundeliegenden unterschiedlichen physikalischen und technischen Prozesse. Die Synchronisation der Messungen muss daher durch eine geeignete Signalverarbeitung erreicht werden, damit die Gasturbinenregelung (und andere Regelsysteme) auch bei transienten Vorgängen zufriedenstellend arbeiten.

Die erfindungsgemässe Methode sorgt nun dafür, dass zur Synchronisation der Messungen $TAT_m$ und $p_{Cm}$ die Zeitkonstanten der zugehörigen Messstrecken weitgehend angeglichen werden. Es sei dazu angenommen, dass gilt:

$$(3.1) \qquad T_1 > T_2.$$

Typische Werte für diese Messungen sind $T_1$=8s und $T_2$=2s. Die der Erfindung zugrundeliegende Idee ist es nun, für den für die Gasturbinenregelung relevanten Frequenzbereich

$$(3.2) \qquad R(s) = 1$$

zu machen, indem die vorhandenen Messwerte $TAT_m$ und/oder $p_{Cm}$ entsprechend nachbearbeitet werden.

Aus (2.7) folgt für den einen Fall, dass die Messstrecke 19 für $p_C$ so verändert werden muss, dass deren Zeitkonstante den Wert $T_1$ annimmt. Dies kann auf einfache Weise dadurch erreicht werden, dass die Werte $p_{Cm}$ einem Filterungsprozess mit einer lead-lag-Filter mit der Uebertragungs- bzw. Filterfunktion

$$(3.3) \qquad G_3 = \frac{G_1(s)}{G_2(s)} = \frac{sT_2 + 1}{sT_1 + 1}$$

unterworfen werden. Hierdurch ergibt sich die korrigierte Druckmessung

$$(3.4) \qquad P_{Cm3} = G_3 p_{Cm}.$$

Die auf diese Weise dynamisch korrigierte TIT-Formel, die dann (2.10) erfüllt, lautet:

$$(3.5) \qquad TIT_m = aTAT_m + bp_{Cm3} + c \,.$$

Das kompensierende Filter $G_3(s)$ ist ein Tiefpassfilter (siehe die Filtercharakteristiken in Fig. 4) und unterdrückt daher Messrauschen, welches durch das lead-Element $(1+sT_2)$ erzeugt werden könnte. Durch die Korrektur wird die Dynamik der $p_C$-Messstrecke einfach der Dynamik der TAT-Messstrecke angeglichen.

Es ist theoretisch jedoch auch denkbar, umgekehrt die Dynamik der TAT-Messung zu verbessern (beschleunigen) und damit an die Dynamik der $p_C$-Messung anzugleichen. Anstelle von $p_{Cm}$ würde dann $TAT_m$ nach folgender Vorschrift korrigiert bzw. kompensiert:

$$(3.6) \qquad TAT_{m4} = G_4(s)TAT_m \text{ mit } G_4(s) = \frac{G_2(s)}{G_1(s)} = \frac{sT_1 + 1}{sT_2 + 1}. \qquad (3.6)$$

Es ergibt sich als korrigierte TIT-Formel:

$$(3.7) \qquad TIT_m = aTAT_{m4} + bp_{Cm} + c = G_2(s)TIT.$$

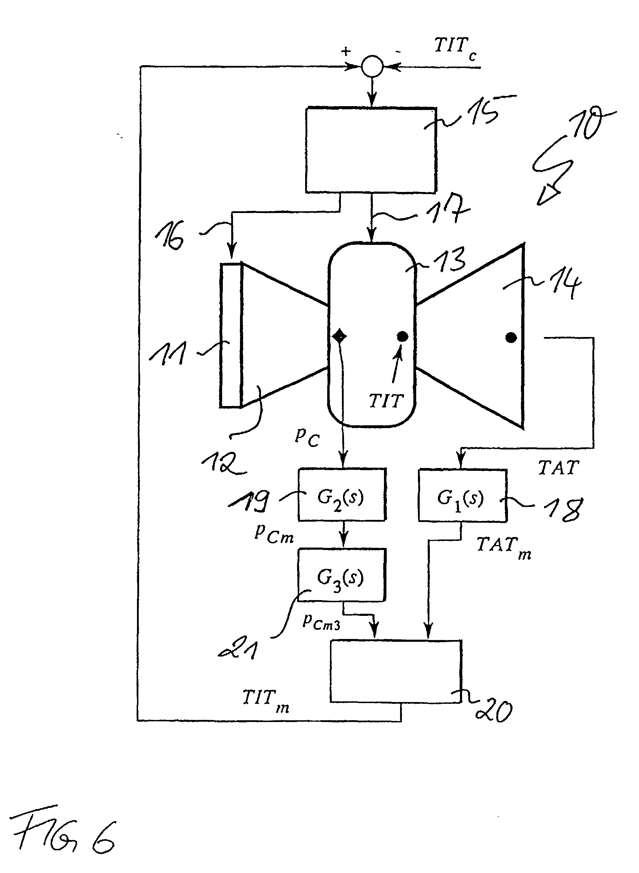

Der Vorteil dieses Vorgehens ist, dass die Dynamik der TIT-Pseudomessung in diesem Fall grösser ist, weil $T_2 < T_1$. Andererseits ist das kompensierende Filter $G_4(s)$ jedoch ein Hochpassfilter (siehe die Filtercharakteristiken in Fig. 5) und ist deshalb empfindlich gegen hochfrequentes Messrauschen. Dieser Nachteil wird im allgemeinen der Anwendung der TIT-Formel nach (3.7) entgegenstehen.

Die zu Fig. 1 vergleichbare korrigierte bzw. kompensierte Regelschleife für die Gasturbine und für den Fall der Korrektur nach Gleichung (3.4) ($p_{Cm}$-Korrektur) ist in Fig. 6 wiedergegeben. Hinter die Messstrecke 19 für den Druck $p_C$ ist hier ein Korrekturglied 21 mit der Uebertragungsfunktion $G_3(s)$ geschaltet, welches die $p_{Cm}$-Werte gemäss Gleichung (3.4) korrigiert und damit zu einer Angleichung der Zeitkonstanten $T_1$ und $T_2$ und damit zu einer Synchronisation der beiden Messstrecken führt.

Ausgehend von dem oben erläuterten konkreten Beispiel der Gasturbinenregelung lässt sich der erfindungsgemässe Korrekturvorgang in seiner verallgemeinerten Form wie folgt darstellen:

Ausgehend von der Beziehung

$$(4.1) \qquad y = \Sigma_i a_i x_i$$

und der zugehörigen stationären Gleichung für die Pseudomessung

$$(4.2) \qquad y_m = \Sigma_i a_i x_{mi}$$

sowie der Dynamiken der einzelnen Messstrecken

$$(4.3) \qquad x_{mi} = G_i(s)x_i$$

und der gewünschten resultierenden Dynamik $G_y(s)$ für $y_m$, d.h.

$$(4.4) \qquad y_m = G_y(s)y$$

kann diese Dynamik dadurch erreicht werden, dass die folgende Gleichung für die Pseudomessung verwendet wird:

$$(4.5) \qquad y_m = \Sigma_i a_i G_{mi}(s)x_{mi}$$

mit

$$(4.6) \qquad G_{mi}(s) = \frac{G_y(s)}{G_i(s)}.$$

Die Korrekturglieder $G_{mi}$ sind dabei nur dann stabil, wenn die Uebertragungsfunktionen $G_y(s)$ stabil sind und die Uebertragungsfunktionen $G_i(s)$ eine minimale Phasenverschiebung aufweisen. Dies führt jedoch in der Praxis zu keinen Problemen, da nahezu alle Messstrecken so konzipiert sind, dass sie diese Eigenschaften aufweisen.

BEZEICHNUNGSLISTE

| 10 | Gasturbine (GT) |
|---|---|
| 11 | Einlassleitschaufel (verstellbar) |
| 12 | Kompressor |
| 13 | Brenner |
| 14 | Turbine |
| 15 | Temperaturregler |
| 16,17 | Steuerleitung |
| 18 | Messstrecke (Turbinenauslasstemperatur TAT) |
| 19 | Messstrecke (Druck am Kompressorauslass) |
| 20 | Berechnungseinheit |
| 21 | Korrekturglied |

**Patentansprüche**

1. Regelsystem zur Regelung wenigstens einer Variablen ($y_m$; $TIT_m$) eines Prozesses, welche wenigstens eine Variable ($y_m$; $TIT_m$) aus einer Mehrzahl von gemessenen Prozessgrössen ($x_{m1}$; $TAT_m$, $p_{Cm}$) berechnet wird, wobei die gemessenen Prozessgrössen ($x_{mi}$; $TAT_m$, $p_{Cm}$) jeweils über zugehörige Messstrecken (18, 19) gemessen werden, deren Uebertragungsfunktionen ($G_i(s)$; $G_2(s)$, $G_1(s)$) ein unterschiedliches Zeitverhalten aufweisen, **dadurch gekennzeichnet, dass** zur Vermeidung von Instabilitäten Korrekturmittel (21) vorgesehen werden, welche die verschiedenen Zeitverhalten der einzelnen Messstrecken (18, 19) ausgleichen.

2. Regelsystem nach Anspruch 1, **dadurch gekennzeichnet, dass** die Korrekturmittel ein oder mehrere Korrekturglieder (21) umfassen, welche hinter den Messstrecken (18, 19) angeordnet sind und das Zeitverhalten der einzelnen Messstrecken (18, 19) korrigieren.

3. Regelsystem nach Anspruch 2, **dadurch gekennzeichnet, dass** jedes der Korrekturglieder (21) eine Uebertragungsfunktion ($G_{mi}(s)$; $G_3(s)$) aufweist, welche zusammen mit der Uebertragungsfunktion ($G_i(s)$; $G_2(s)$) der zugehörigen Messstrecke (18) eine Gesamtübertragungsfunktion ($G_y(s)$; $G_3(s)*G_2(s)$)ergibt, welche für alle zu messenden Prozessgrössen ($x_{m1}$; $TAT_m$, $p_{Cm}$) zumindest näherungsweise gleich ist.

4. Anwendung eines Regelsystems nach Anspruch 1 zur Regelung der Turbineneinlasstemperatur (TIT) einer Gasturbine (10), welche einen Kompressor (12), einen Brenner (13) und eine nachfolgende Turbine (14) umfasst.

5. Anwendung nach Anspruch 4, **dadurch gekennzeichnet, dass** die berechnete Turbineneinlasstemperatur ($TIT_m$) aus einer über eine erste Messstrecke (18) gemessenen Turbinenauslasstemperatur ($TAT_m$) und einem über eine zweite Messstrecke (19) gemessenen Druck ($p_{Cm}$) am Kompressorauslass berechnet wird, und dass die Korrekturmittel ein Korrekturglied (21) umfassen, welches hinter die zweite Messstrecke (19) geschaltet ist.

6. Anwendung nach Anspruch 5, **dadurch gekennzeichnet, dass** die erste Messstrecke (18) eine erste Uebertragungsfunktion ($G_1(s)$) aufweist, dass die zweite Messstrecke (19) eine zweite Uebertragungsfunktion ($G_2(s)$) aufweist, und dass das Korrekturglied (21) eine dritte Uebertragungsfunktion ($G_3(s)$) aufweist, welche sich als Quotient aus der ersten und zweiten Uebertragungsfunktion ergibt.

7. Anwendung nach Anspruch 6, **dadurch gekennzeichnet, dass** die erste Uebertragungsfunktion ($G_1(s)$) die Form $G_1(s) = 1/(sT_1+1)$ mit der ersten Zeitkonstante $T_1$ (s = Laplace-Operator) und die zweite Uebertragungsfunktion ($G_2(s)$) die Form $G_2(s) = 1/(sT_2+1)$ mit der zweiten Zeitkonstante $T_2$ hat, und dass sich die berechnete Turbineneinlasstemperatur ($TIT_m$) linear aus der gemessenen Turbinenauslasstemperatur ($TAT_m$) und dem gemessenen Druck ($p_{Cm}$) am Kompressorauslass ergibt.

8. Anwendung nach einem der Ansprüche 5 bis 7, **dadurch gekennzeichnet, dass** die berechnete Turbineneinlasstemperatur ($TIT_m$) mit einem Sollwert ($TIT_c$) verglichen und nach Massgabe der Abweichung der Massenfluss des Brennstoffs in den Brenner (13) und der Einlass der Verbrennungsluft in den Kompressor (12) gesteuert wird.

**Claims**

1. Control system for controlling at least one variable ($y_m$; $TIT_m$) of a process, the at least one variable ($y_m$; $TIT_m$) being calculated from a multiplicity of measured process variables ($X_{mi}$; $TAT_m$, $p_{Cm}$), the measured process variables ($x_{mi}$; $TAT_m$, $p_{Cm}$) in each case being measured via associated measuring sections (18, 19), the transfer functions ($G_i(s)$; $G_2(s)$, $G_1(s)$) of which have a different time response, **characterized in that**, to avoid instability, correction means (21) which equalize the different time responses of the individual measuring sections (18, 19) are provided.

2. Control system according to Claim 1, **characterized in that** the correction means comprise one or more correction elements (21) which are arranged downstream of the measuring sections (18, 19) and correct the time response of the individual measuring sections (18, 19).

3. Control system according to Claim 2, **characterized in that** each of the correction elements (21) has a transfer function ($G_{mi}(s)$; $G_3(s)$) which, together with the transfer function ($G_i(s)$; $G_2(s)$) of the associated measuring section (18), produces an overall transfer function ($G_y(s)$; $G_3(s)*G_2(s)$) which is at least approximately the same for all the

process variables ($x_{mi}$; $TAT_m$, $p_{Cm}$) to be measured.

4.  Use of a control system according to Claim 1 for controlling the turbine inlet temperature (TIT) of a gas turbine (10) which comprises a compressor (12), a burner (13) and a following turbine (14).

5.  Use according to Claim 4, **characterized in that** the calculated turbine inlet temperature ($TIT_m$) is calculated from a turbine outlet temperature ($TAT_m$), measured via a first measuring section (18), and from a pressure ($p_{Cm}$), measured via a second measuring section (19), at the compressor outlet, and **in that** the correction means comprise a correction element (21) which is connected downstream of the second measuring section (19).

6.  Use according to Claim 5, **characterized in that** the first measuring section (18) has a first transfer function ($G_1$(s)), **in that** the second measuring section (19) has a second transfer function ($G_2$(s)), and **in that** the correction element (21) has a third transfer function ($G_3$(s)) which is obtained as a quotient of the first and second transfer function.

7.  Use according to Claim 6, **characterized in that** the first transfer function ($G_1$(s)) has the form $G_1$(s) = $1/(sT_1+1)$ with the first time constant $T_1$ (s = Laplace operator), and the second transfer function ($G_2$(s)) has the form $G_2$(s) = $1/(sT_2+1)$ with the second time constant $T_2$, and **in that** the calculated turbine inlet temperature ($TIT_m$) results linearly from the measured turbine outlet temperature ($TAT_m$) and the measured pressure ($p_{Cm}$) at the compressor outlet.

8.  Use according to one of Claims 5 to 7, **characterized in that** the calculated turbine inlet temperature ($TIT_m$) is compared with a desired value ($TIT_c$) and is controlled in accordance with the deviation of the mass flow of the fuel into the burner (13) and the admission of the combustion air into the compressor (12).

**Revendications**

1.  Système de contrôle pour contrôler au moins une variable ($y_m$; $TIT_m$) d'un processus, laquelle au moins une variable ($y_m$; $TIT_m$) est calculée à partir d'une pluralité de grandeurs mesurées ($X_{mi}$; $TAT_m$, $p_{Cm}$) du processus, dans lequel les grandeurs mesurées ($x_{mi}$; $TAT_m$, $p_{Cm}$) du processus sont mesurées chaque fois sur des zones de mesure associées (18, 19), dont les fonctions de transfert [$G_i$(s); $G_2$(s), $G_1$(s)] présentent un comportement temporel différent, **caractérisé en ce qu'**il est prévu, pour éviter des instabilités, des moyens de correction (21) qui compensent les comportements temporels différents des zones de mesure individuelles (18, 19).

2.  Système de contrôle suivant la revendication 1, **caractérisé en ce que** les moyens de correction comprennent un ou plusieurs organes de correction (21), qui sont disposés après les zones de mesure (18, 19) et qui corrigent le comportement temporel des zones de mesure individuelles (18, 19).

3.  Système de contrôle suivant la revendication 2, **caractérisé en ce que** chacun des organes de correction (21) présente une fonction de transfert [$G_{mi}$(s), $G_3$(s)], qui donne avec la fonction de transfert [$G_i$(s), $G_2$(s)] de la zone de mesure associée (18, 19) une fonction de transfert globale [$G_y$(s); $G_3$(s)*$G_2$(s)], qui est au moins approximativement identique pour toutes les grandeurs du processus à mesurer ($x_{mi}$; $TAT_m$, $p_{Cm}$).

4.  Application d'un système de contrôle suivant la revendication 1 pour le contrôle de la température d'entrée de turbine (TIT) d'une turbine à gaz (10), qui comprend un compresseur (12), un brûleur (13) et une turbine (14) montée à la suite.

5.  Application suivant la revendication 4, **caractérisée en ce que** la température d'entrée de turbine calculée ($TIT_m$) est calculée à partir d'une température de sortie de turbine ($TAT_m$) mesurée sur une première zone de mesure (18) et d'une pression ($p_{Cm}$) à la sortie du compresseur mesurée sur une deuxième zone de mesure (19), et **en ce que** les moyens de correction comprennent un organe de correction (21), qui est monté après la deuxième zone de mesure (19).

6.  Application suivant la revendication 5, **caractérisée en ce que** la première zone de mesure (18) présente une première fonction de transfert [$G_1$(s)], **en ce que** la deuxième zone de mesure (19) présente une deuxième fonction de transfert [$G_2$(s)], et **en ce que** l'organe de correction (21) présente une troisième fonction de transfert [$G_3$(s)], qui est formée par le quotient de la première et de la deuxième fonctions de transfert.

7. Application suivant la revendication 6, **caractérisée en ce que** la première fonction de transfert [$G_1(s)$] présente la forme $G_1(s) = 1/(sT_1 + 1)$ avec la première constante de temps $T_1$ (s = opérateur de Laplace) et la deuxième fonction de transfert [$G_2(s)$] présente la forme $G_2(s) = 1/(sT_2 + 1)$ avec la deuxième constante de temps $T_2$, et **en ce que** la température d'entrée de turbine calculée ($TIT_m$) découle linéairement de la température de sortie de turbine mesurée ($TAT_m$) et de la pression mesurée ($p_{Cm}$) à la sortie du compresseur.

8. Application suivant l'une quelconque des revendications 5 à 7, **caractérisée en ce que** l'on compare la température d'entrée de turbine calculée ($TIT_m$) à une valeur de consigne ($TIT_c$) et **en ce que**, en fonction de l'écart, on règle le flux massique du combustible dans le brûleur (13) et l'entrée de l'air de combustion dans le compresseur (12).

$$TIT_c$$

FIG. 1

FIG. 2

FIG. 3

Fig. 5

Fig. 4

FIG 6